# EUROPÄISCHE PATENTSCHRIFT

(11) **EP 1 533 149 B1**
(45) Veröffentlichungstag und Bekanntmachung des Hinweises auf die Patenterteilung: **20.01.2010**
(21) Anmeldenummer: 04023640.8
(22) Anmeldetag: 05.10.2004
(51) Int. Cl.: B60D 1/54

(54) **Anhängerkupplung für Kraftfahrzeuge**
Trailer hitch for vehicles
Attelage pour vehicules

(30) Priorität: 21.11.2003 DE 10354753
(43) Veröffentlichungstag der Anmeldung: 25.05.2005
(60) Teilanmeldung: 09160049.4
(73) Patentinhaber: WESTFALIA - Automotive GmbH, 33378 Rheda-Wiedenbrück (DE)
(72) Erfinder: Domke, Friedrich, 33442 Herzebrock-Clarholz (DE); Drücker, Michael, 33334 Gütersloh (DE); Hermbusch, Gerhard, 33449 Langenberg (DE); Peitz, Jürgen, 33378 Rheda-Wiedenbrück (DE); Wyrwich, Martin, 33378 Rheda-Wiedenbrück (DE)
(74) Vertreter: Kohlmann, Kai

(56) Entgegenhaltungen:
- EP-A- 1 084 871
- DE-A1- 19 711 535
- US-B1- 6 402 178

## Beschreibung

Die Erfindung betrifft eine Anhängekupplung für Kraftfahrzeuge, umfassend eine fahrzeugfest angeordnete, über eine Bahnsteuerung schwenkbar sowie axial verschieblich gelagerte Kugelstange, die an ihrem freien Ende eine Kupplungskugel trägt und sowohl in ihrer Ruhelage als auch in ihrer Betriebslage über in Eingriff bringbare Formschlusskonturen einerseits eines Kugelstangenlagerkopfes und andererseits eines diesem gegenüberliegenden Bauteiles drehfest festlegbar ist.

Eine Anhängekupplung mit einer die Dreh- Schwenkbewegung der Kugelstange bewirkenden Bahnsteuerung ist aus der EP 1 084 871 A2 bekannt. Hierzu besitzt eine die Kugelstange aufnehmende Hülse einen linearen Führungsschlitz und mit diesem verastete Abzweigungsschlitze. In den Führungsschlitz greift ein an dem von der Kupplungskugel entfernten Ende fest mit der Kugelstange verbundener Kulissenstift ein. Sobald der Kulissenstift in einen Abzweigungsschlitz gelangt, wird der axialen Bewegung eine Drehbewegung der Kugelstange überlagert. Die axiale Verstellung wird von einem Motor eingeleitet, der eine in einer axialen Bohrung der Kugelstange angeordnete, zentrale Verstellspindel beaufschlagt

Bei einer durch die DE 198 59 961 A1 bekanntgewordenen Anhängerkupplung ist die fahrzeugfest angeordnete, schwenkbar sowie axial verschieblich gelagerte Kugelstange sowohl in ihrer Ruhelage als auch in ihrer Betriebslage über in Eingriff bringbare Formschlusskonturen einerseits des Kugelstangenlagerkopfes und andererseits eines diesem gegenüberliegenden Bauteiles in Form eines Anbauflansches drehfest festlegbar. Die Kugelstange wird sowohl in der Ruhelage, in welcher sich die Kugelstange in etwa quer zur Fahrzeuglängsrichtung unter dem Stoßfänger bzw. der Heckschürze befindet, als auch in der Betriebslage, in weicher sich die Kugelstange im wesentlichen in Fahrzeuglangsrichtung befindet, mittels der Formschlussverbindungen drehfest festgelegt. Die Formschlussverbindungen, hier bestehend aus einer Verzahnung sowie einer Gegenverzahnung, greifen in den Drehendstellungen des Kugelstangenlagerkopfes ineinander.

Zum Festlegen und Freigeben dieser bekannten Kugelstange dient ein verstellbares, die Lagerhülse bzw den Kugelstangenlagerkopf abstützendes Widerlager, das wie der Kugelstangenlagerkopf auf einem Lagerbolzen angeordnet ist, der über einen Befestigungsansatz bzw. Anbauflansch an einem mit dem Fahrzeug verbundenen Querrohr befestigt ist. In der einen Axialstellung des die Lagerhülse abstützenden Widerlagers stehen die Formschlusskonturen von Lagerbolzen und Lagerhülse so miteinander in Eingriff, dass die Lagerhülse und damit die Kugelstange gegenüber dem Fahrzeug nicht verdreht werden kann. In der zweiten Axialstellung, in der das Widerlager dann von dem Befestigungsansatz entfernt ist, kann die Lagerhülse so weit abgerückt werden, dass die Formschlusskonturen außer Eingriff kommen, worauf die Lagerhülse samt daran angeordneter Kugelstange zwischen der Ruhe- und der Betriebslage verschwenkt werden kann. Die jeweilige Verriegelungsposition wird danach durch eine erneute Axialverschiebung des Widerlagers erreicht.

Weiterhin sind Anhängerkupplungen bekannt, die zum Festlegen und Freigeben der Kugelstange eine Verriegelung aufweisen, die einen gegen ein anstehendes Kraftelement, insbesondere eine Druckfeder, über ein von außen betätigbares Druck- oder Zugmittel zurückstellbaren Sperrbolzen besitzt, dem radial ein- und ausrückbare Rastmittel, insbesondere Kugeln, zugeordnet sind, wie aus der DE-U 94 08 478.5 bekannt. Das Vorspannen der Druckfeder erfolgt hierbei mittels eines Handrades, das eine Zahnstange als Verbindung zum Sperrbolzen betätigt.

Aus der EP 0 850 147 B1 ist eine Anhängekupplung mit einem motorischen Antrieb unter Zwischenschaltung eines Umlaufrädergetriebes zum Verschwenken der Kugelstange zwischen ihrer Ruhe- und ihrer Betriebsstellung bekannt. Die Kugelstange selbst ist als Teil einer Spindel eines Spindel-Mutter-Antriebes ausgebildet und axial verstellbar. Sie besitzt eine eingeschraubte Verstellspindel, die über ein Stirnrad- sowie Planetengetriebe von einem elektrischen Motor gedreht wird. Die Kugelstange ist in einer Führungshülse angeordnet, die mit einer Zwangsführung ausgebildet ist und bewirkt, dass nach einem geführten Axial-Verstellweg die Kugelstange dann mit in ihrer Betriebsstellung nach oben zeigender Kugel gedreht wird.

Eine durch die EP-A-0 799 732 bekanntgewordene Anhängekupplung weist für die Bewegung der Kugelstange nur eine einzige, schräg ausgerichtete Schwenkachse auf. Diese erfordert wegen der räumlichen Schräglage der Schwenkachse einen großen Bauraum und zudem auch einen großen freien Bewegungsraum, der bei vielen Fahrzeugen nicht zur Verfügung steht. Aus der WO-A1-03/072375 ist eine Anhängekupplung mit einem mechanischen Bewegungsantrieb bekannt, bei der die Kugelstange um zwei im rechten Winkel zueinander ausgerichtete rotatorische Achsen beweglich gelagert ist.

Der Erfindung liegt die Aufgabe zugrunde, eine gattungsgemäße, weitestgehend wartungsfreie Anhängekupplung zu schaffen, die beim Verschwenken (motorisch oder von Hand) der Kugelstange beliebige und variable Schwenkbewegungen erlaubt, insbesondere um die Kugelstange mit geringstmöglichem Bewegungsraum in eine nicht sichtbare Außerbetriebsstellung verschwenken zu können; außerdem soll eine selbsttätige axiale Zwangsverschiebung der Kugelstange ermöglicht werden.

Diese Aufgabe wird erfindungsgemäß dadurch gelöst, dass der Kugelstangenlagerkopf auf einem beim Schwenken der Kugelstange von der einen in die andere Endlage Bewegungen um einen sich im Raum verändernden Punkt bewirkendes Taumellager mit einer Bahnsteuerung des Kugelstangeniagerkopfes angeordnet ist und dass das Taumellager auf einer Hohlwelle angeordnet ist, die mit einer zentral integrierten axial wirkenden Verriegelung des Kugelstangenlagerkopfes zum in Eingriff bringen der Formschlußkonturen sowohl in der Betriebslage als auch in der Ruhelage der Kugelstange ausgebildet ist. Es läßt sich damit erreichen, dass die Schwenkbewegungen nicht mehr von Drehachsen, wie im Raum schräg verlaufenden Drehachsen, abhängig sind. Nach dem manuell oder motorisch bewirkten axialen Abrücken der Kugelstange, wozu nur ein geringer axialer Verschiebeweg benötigt wird, um die Formschlusskonturen außer Eingriff zu bringen, kann die Kugelstange mit einer fast linearen Bewegung, d.h. weitestgehend in jeder Position den gleichen Abstand zum Fahrzeugheck bzw. Fahrzeugheckblech einhaltend von Hand oder motorisch in ihre Endlage verschwenken und dort anschließend wieder verriegelt werden. Das Taumellager ist erfindungsgemäß auf einer Hohlwelle angeordnet, die zentral integriert mit einer axial wirkenden Verriegelung des Kugelstangenlagerkopfes zum in Eingriff bringen der Formschlusskonturen sowohl in der Betriebslage als auch in der Ruhelage der Kugelstange ausgebildet ist. Durch die Abkehr von einer auf einem Lagerbolzen bzw. einer durchgängigen Lagerachse gelagerten Kugelstange, die vielmehr auf der Hohlwelle mit zentral integrierter Verriegelung angeordnet ist, lässt sich ein in sich geschlossenes, weitestgehend wartungsfreies System erreichen. Die axial wirkende Verriegelung ermöglicht zudem eine gleichzeitig selbsttätige axiale Zwangsverschiebung der Kugelstange, sobald die Sperrung bzw. Verriegelung in einer Drehendlage aufgehoben wird.

Eine Ausführung der Erfindung sieht vor, dass das Taumellager einen Kugelkopf aufweist, der unter Zwischenschaltung eines Lagerringes in einem halbschalenartigen Gehäuse des Kugelstangenlagerkopfes angeordnet ist. Nach dem Auslösen der Verriegelung bzw. Formschlussverbindung und dem damit einhergehenden axialen Abrücken bzw. Verschieben des Kugelstangenlagerkopfes kann sich dieser mit von der Bahnsteuerung vorgegebenem, optimiertem Bewegungsverlauf auf dem Kugelkopf verschwenken.

Bei einer anderen Ausführung weist das Taumellager einen sphärisch ausgebildeten Lagerring auf, der - optional über einen komplementär sphärischen Zwischenring - den Kugelstangenlagerkopf trägt. Die sich hier um den Lagerring drehende Kugelstange kann große Taumelwinkel durchführen.

Hierbei lässt sich nach einer vorteilhaften Ausgestaltung der Kugeistangenlagerkopf kugelig ausbilden und in einem gewölbtem Bauteil, z. B. ein topfartiges Drehteil oder ein Verbindungsblech, anordnen. Ein zur Befestigung an einem Grundträger des Fahrzeugs benötigtes Verbindungsblech kann somit schon gleich auch den Kugelstangenlagerkopf aufnehmen, wobei die Formschlusskonturen, z. B. Kugeln und Kalotten oder Verzahnung und Gegenverzahnung, einerseits im Kugelstangenlagerkopf und andererseits in der Wölbung des Bauteils bzw. insbesondere Verbindungsbleches vorgesehen sind.

Ausgestaltungen der Erfindung sehen vor, dass die Hohlwelle in dem Verbindungsblech angeordnet ist oder sich bis in den Kugelkopf fortsetzend einstückig mit diesem ausgebildet ist. Im letztgenannten Fall liegt sozusagen ein Hohlkugelbolzen vor.

In bevorzugter Ausführung umfasst die Verriegelung einen in der Hohlwelle geführten, gegen ein anstehendes Kraftelement über ein von außen betätigbares Druck- oder Zugmittel zurückstellbaren Sperrbolzen und mit diesem zusammenwirkende, in Radialbohrungen der Hohlwelle angeordnete, ein und ausrückbare Rastmittel. In der Verriegelungsposition, die durch eine selbsthemmende Schräge und/oder einen Hinterschnitt des Sperrbolzens zusätzlich gesichert werden kann, drückt der Sperrbolzen die Rastmittel, z. B. Kugeln, Stifte oder dergleichen, in den Radialbohrungen nach außen in den Lagerring und verhindert damit eine axiale Verstellung der Kugelstange. Wenn dann das Kraftelement, z. B. eine Druckfeder, vorgespannt bzw. zusammengezogen wird, beispielsweise mittels eines Handrades, wie aus der bereits genannten DE-U 94 084 785 bekannt, so dass der Sperrbolzen zurückgezogen wird, fallen die zuvor auseinandergedrückten Rastmittel nach innen. Sie legen sich dann vor den Kopf des Sperrbolzens und verhindern, dass der Sperrbolzen sich aus seiner zurückgezogenen Lage axial nach vorne bewegen kann. Durch das Zurückziehen des Sperrbolzens kommt die Kugelstange aus ihrer Formschlussverbindung frei und kann nach dem Entriegeln somit unter der Schwerkraft bei gleichzeitiger axialer Verschiebung in eine Zwischenposition schwenken. Aus dieser heraus lässt sie sich manuell oder motorbetrieben in die gewünschte, jeweils durch einen äußeren Anschlag gesicherte Drehendlage verschwenken und erneut verriegeln, wozu dem Kraftelement die Entspannung ermöglicht wird, so dass der Sperrbolzen vorrücken und die Rastmittel wieder nach außen in ihre Einrastposition drücken kann. Alternativ zur mechanischen Handrad-Auslösung ist z. B. auch ein motorischer Auslöseantrieb oder der Einsatz von Elektro- bzw. Hubmagneten möglich, deren axiale Bewegung ein weiterer Hubmagnet als Sicherung sperren kann. Bei einer Betätigung wird über eine Steuerung zunächst der Sicherungshubmagnet und anschließend der Hauptmagnet gelöst.

Zum taumelnden, raum- und platzsparenden Verschwenken der Kugelstange in ihre Drehendlagen wird erfindungsgemäß vorgeschlagen, dass die Bahnsteuerung als Kulisse mit darin eingreifenden Folgemitteln ausgebildet ist. Alternativ zu einer Bahnsteuerung mit ineinandergreifenden Teilen, wie eine Kulisse und Folgemittel (Stift, Bolzen oder dergleichen), können auch aufeinander gleitende bzw. abgleitende Bauteile vorgesehen werden.

Hierbei empfiehlt es sich, dass die Kulisse als Radialnut im Kugelkopf mit auf der einen Kugelkopfhälfte zu der anderen Kugelkopfhälfte entgegengerichtetem Verlauf der Nutbahnen ausgebildet ist und die Folgemittel zueinander diametral in einem im Kugelstangenlagerkopf vorgesehenen Haltering angeordnete Stifte sind. Die Nutbahnen geben der Kugelstange uber die eingreifenden Stifte oder dergleichen Führungselemente bzw. Folgemittel sowohl den Schwenkverlauf bzw das Taumeln um den Hohlkugelbolzen bzw. den sphärischen Lagerring als auch das Ab- und Einrücken, d.h. den axialen Verschiebeweg um wenige Millimeter, exakt vor.

Wenn den Folgemitteln in den Taumel-Endlagen des Kugelstangenlagerkopfes im Kugelkopf axiale Ausnehmungen zugeordnet sind, in die die Nutbahnen übergehen, können in den Drehendlagen die Stifte bzw. Folgemittel lagesicher in die Ausnehmungen eintauchen. Dieses Eintauchen in die Ausnehmungen wird erleichtert, wenn der Übergang von den Nutbahnen zu den Ausnehmungen trichterförmig ausgebildet ist.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen Gesamtansicht eine Anhängekupplung mit in ihrer Betriebslage verriegelter, sich mittig in Längsrichtung eines nicht dargestellten Fahrzeugs erstreckender Kugelstange, hier angeschlossen an einen Handrad-Auslösemechanismus;
- Fig. 2: als Einzelheit die nach dem Auslösen axial bereits verschobene Kugelstange;
- Fig. 3: die Kugelstange nach Fig. 2 um 30° geschwenkt und zusammenfallend mit der Einleitung der Taumelbewegung;
- Fig. 4: die Kugelstange nach Fig. 2 um 60° geschwenkt und um ca. 1,5° getaumelt;
- Fig. 5: die Kugelstange nach Fig. 2 um 90° geschwenkt und ca. 5° getaumelt,
- Fig. 6: die Kugelstange nach Fig. 2 um 120° geschwenkt in der TaumelRückbewegung, getaumelt ca. um 1,5°;
- Fig. 7: die Kugelstange nach Fig. 7 um 150° geschwenkt und am Ende der Taumelbewegung;
- Fig. 8: die Kugelstange nach Fig. 2 um 180° geschwenkt vor dem Einleiten des Einrast- bzw. Verriegelungsvorgangs in der Ruhestellung;
- Fig. 9: die Kugelstange nach Fig. 2 in der axial eingerückten, verrasteten Ruhestellung;
- Fig.10: eine Bewegungsübersicht mit einzelnen Phasen der Kugelstange auf dem Weg aus ihrer Betriebsstellung in die Ruhestellung;
- Fig.11: die Kugelstange nach Fig. 2 einschließlich Taumellagerung in Explosionsdarstellung mit Ansicht in Fahrtrichtung von vorne gesehen;
- Fig.12: als Einzelheit der Kugelstange nach Fig. 2 in mehreren Ansichten einen Hohlkugelbolzen der Taumellagerung;
- Fig.13: die Kugelstange nach Fig. 2 in einem Längsschnitt durch deren auf einer Taumellagerung angeordnetem Kugelstangenlagerkopf; und
- Fig.14: in einem schematischen Längsschnitt eine andere Ausführung einer Taumellagerung der Kugelstange.

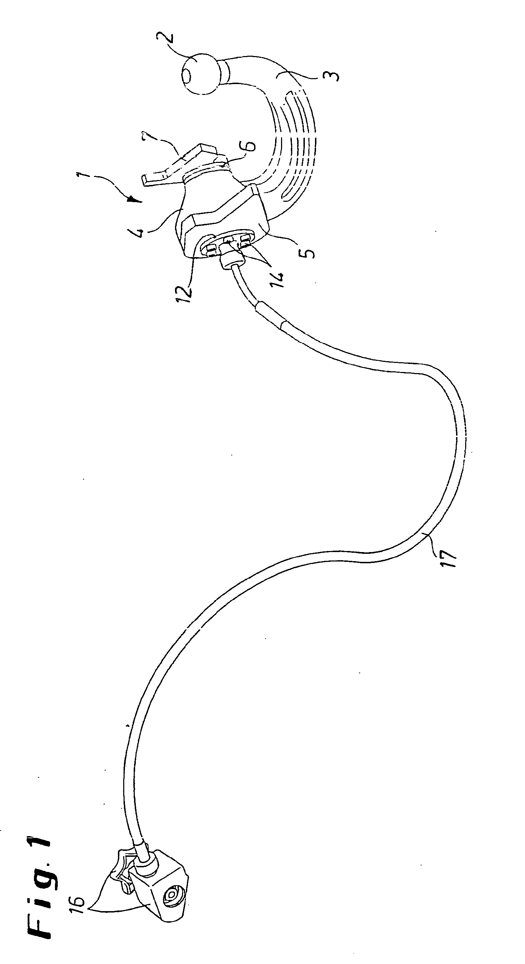

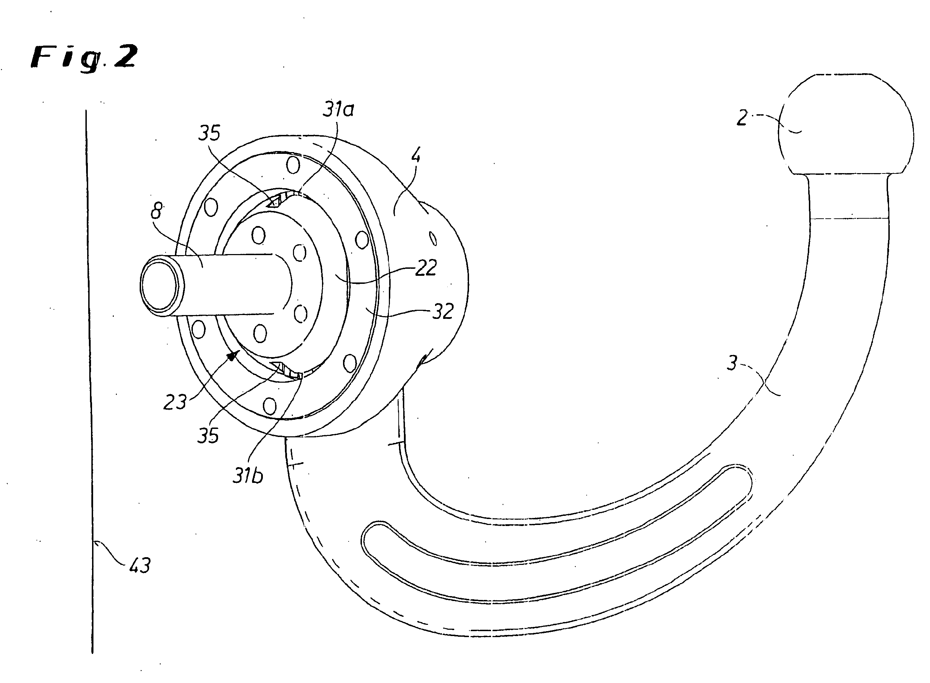

Eine in Fig. 1 gezeigte Anhängekupplung 1 ist über einen ein- oder mehrteiligen Querträger an einem Fahrzeug (nicht dargestellt) befestigt. Die Anhängekupplung 1 umfaßt im Ausführungsbeispiel eine gekröpfte, an ihrem freien Ende eine Kupplungskugel 2 tragende Kugelstange 3, die mit ihrem Kugelstangenlagerkopf 4 hier zwischen einem Anbauflansch 5 und einem unter Zwischenschaltung einer Ausgleichsscheibe 6 gegenüberliegenden Verbindungsblech 7 angeordnet ist. Die Halterung des Kugelstangenlagerkopfes erfolgt mittels einer Hohlwelle 8 bzw. 108 (vgl. die Fig. 2 bis 13 bzw. 14), auf der die Kugelstange mit ihrem Kugelstangenlagerkopf angeordnet ist. Statt einer Befestigung zwischen zwei Bauteilen (Verbindungsblech 7 mit vorgeschalteter Ausgleichsscheibe 6 und Anbauflansch 5) kann die Kugelstange an einem Ende auch durch Endkappen bzw. -hülsen verschlossen und nur über ein Bauteil, gegebenenfalls unter Einbeziehung eines Knotenbleches, befestigt werden. Am Beispiel der Fig. 1 ist die Hohlwelle mit einer Montagebuchse verschraubt, die von der Außenseite des Anbauflansches 5 her in eine in Bezug auf die Hohlwelle zentrische Bohrung mit einer Nabe eingesetzt ist, wobei die zentrische Bohrung der Außenseite des Anbauflansches 5 von einem Flansch der Montagebuchse überkragt wird, so dass durch den Flansch 12 in einen Kragen der Hohlwelle eingeschraubte Befestigungsschrauben 14 für eine exakte Positionierung der Hohlwelle sorgen.

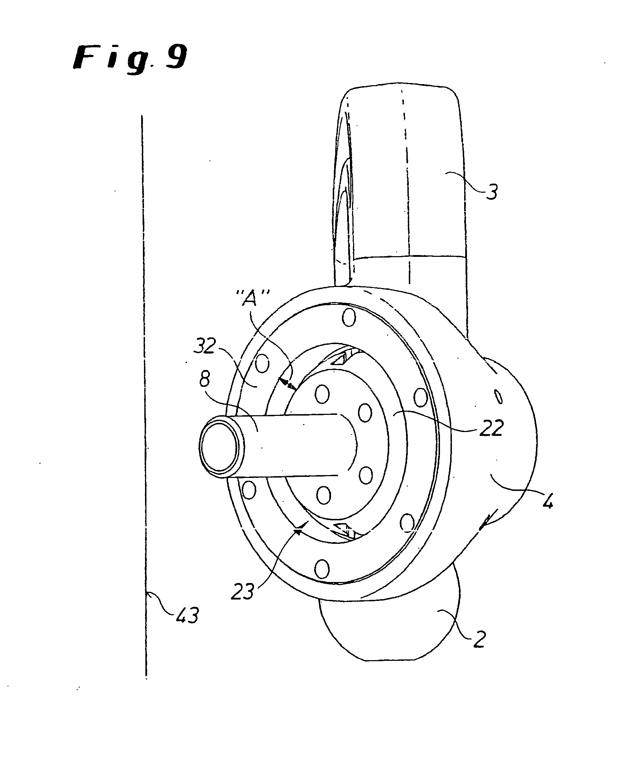

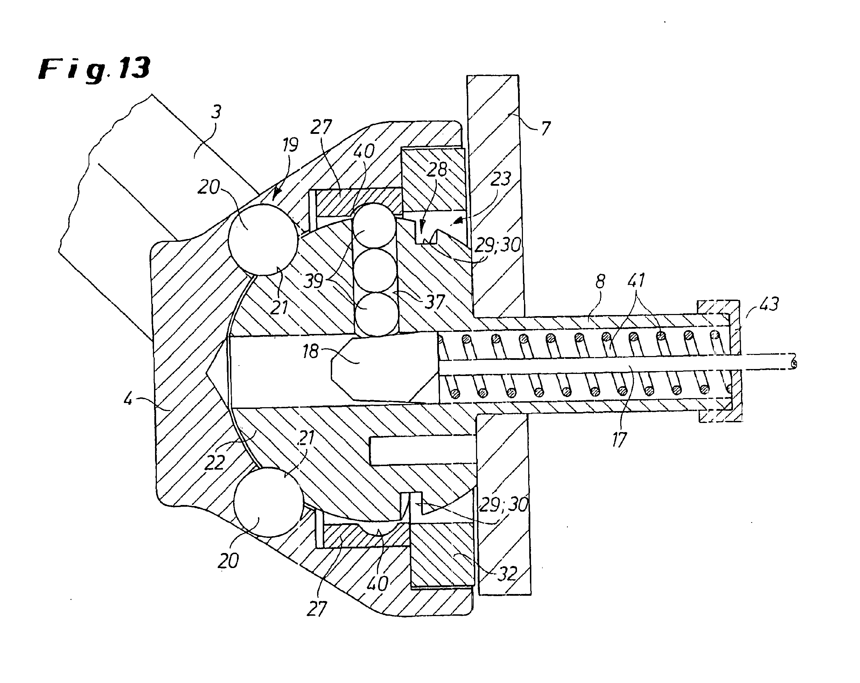

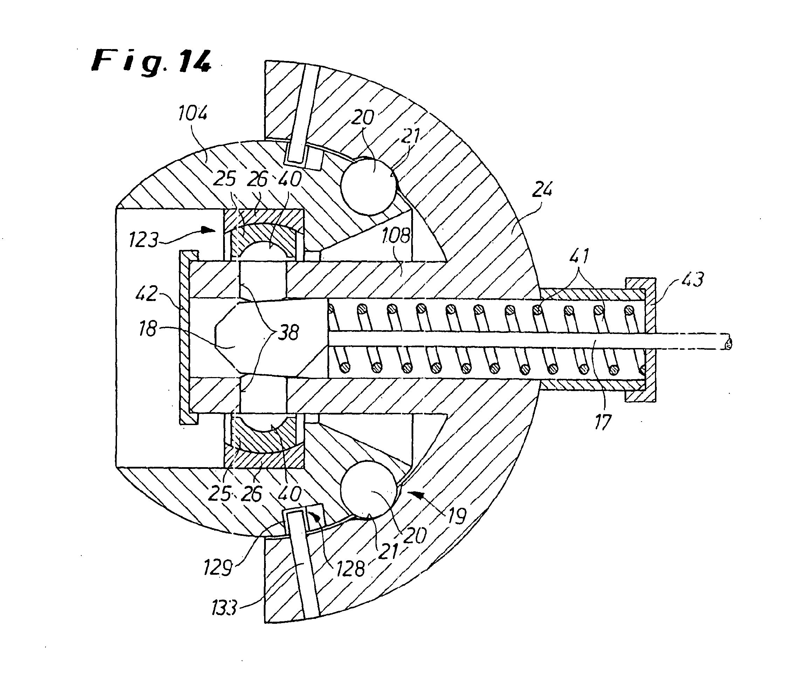

In der in Fig. 1 dargestellten Betriebslage ist die Kugelstange 3 ebenso drehfest verriegelt wie in ihrer in Fig. 9 nach dem Verschwenken in die andere Drehendlage gezeigten Ruhelage. Zum Entriegeln und damit Freigeben der Schwenkbewegung der Kugelstange 3 ist im Ausführungsbeispiel nach Fig. 1 von der Seite des Anbauflansches 5 her an die Anhängekupplung 1 ein Handrad-Auslösemechanismus 16 über einen Bowdenzug 17 angeschlossen, der an seinem in den Kugelstangenlagerkopf 4 eintauchenden Ende mit einem in der Hohlwelle 8 bzw. 108 vor- und zurückbewegbaren Sperrbolzen 18 (vgl. die Fig. 13 und 14) verbunden ist.

In den Drehendlagen (Betriebs- oder Ruhelage) ist die Kugelstange 3 über eine Formschiussverbindung 19, die hier aus Kugeln 20 und diesen gegenuberliegend zugeordneten Kalotten 21 besteht, drehfest festgelegt. Im Ausführungsbeispiel nach Fig. 13 sind die Kugeln 20 im Kugelstangenlagerkopf 4 und einem Kugelkopf 22 eines die Kugelstange 3 bzw. deren Kugelstangenlagerkopf 4 aufnehmenden Taumellagers 23 und nach Fig. 14 sind die Kugeln 20 in einem kugelig ausgebildeten Kugelstangenlagerkopf 104 und die Kalotten in einem dort gewölbten Verbindungsblech 24 vorgesehen. Bei der Ausführung nach Fig. 14 bilden ein auf der Hohlwelle 108 angeordneter sphärischer Lagerring 25 und ein dazu komplementär sphärischer Zwischenring 26, auf dem sich der kugelige Kugeistangenlagerkopf 104 abstützt, ein Taumellager 123. Statt einen Zwischenring vorzusehen, könnte eine entsprechende halbrunde Kontur sogleich schon in den Kugelstangenlagerkopf 104 eingearbeitet werden.

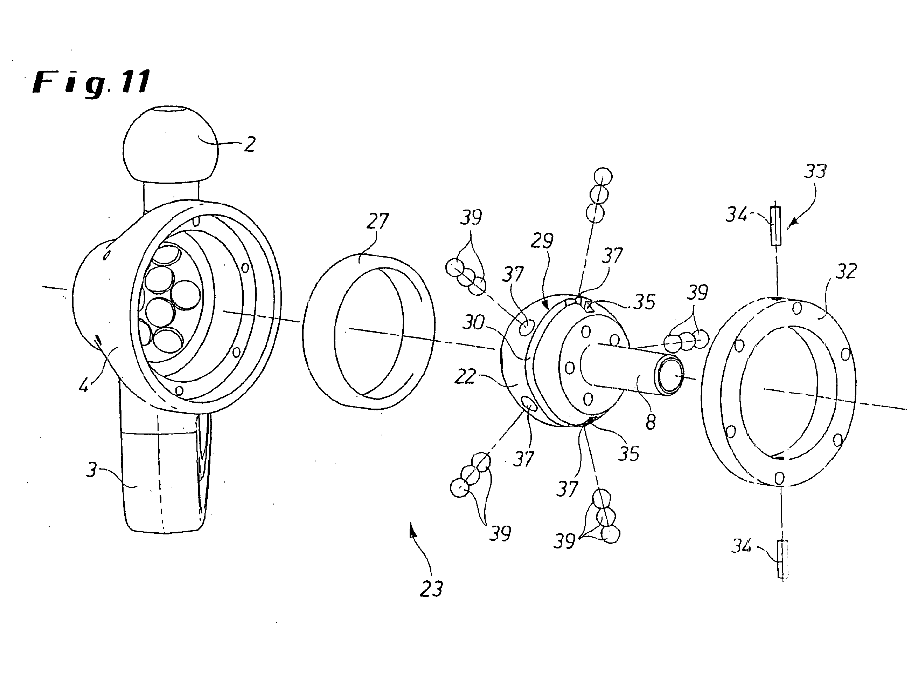

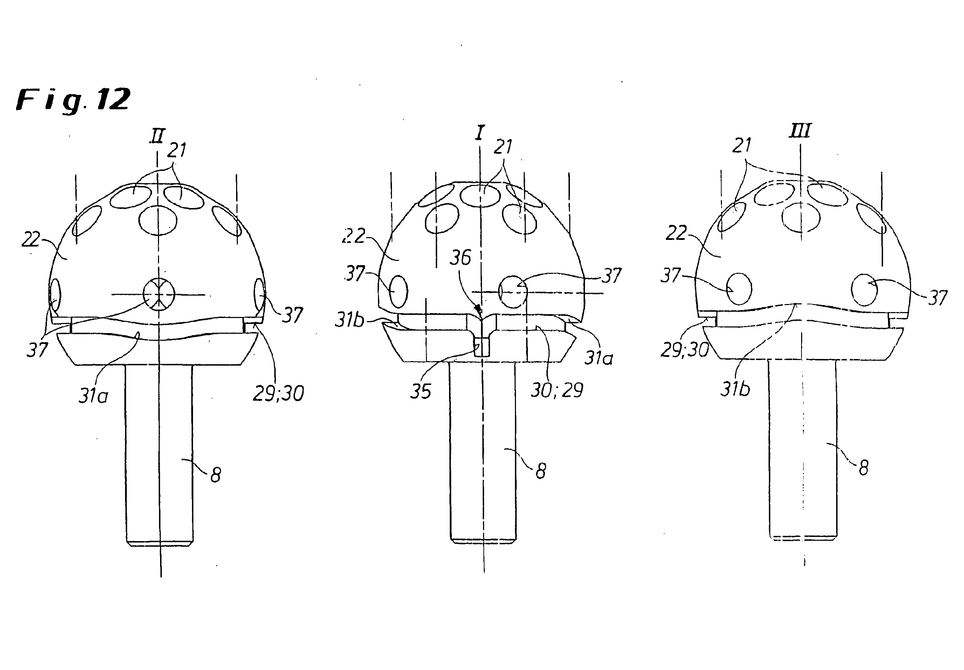

Das Taumellager 23 der in den Figuren 2 bis 10 gezeigten Kugelstange 3 ist im einzelnen der Figur 11 in Verbindung mit Figur 12 zu entnehmen. Der Kugelkopf 22 des Taumellagers 23 ist einstückig mit der Hohlwelle 8 ausgebildet und unter Zwischenschaltung eines Lagerringes 27 in einem halbschalenartigen Gehäuse des Kugelstangenlagerkopfes 4 angeordnet. Zur taumelnden Bewegung beim Schwenken der Kugelstange 3 bzw. des Kugelstangenlagerkopfes 4 ist eine Bahnsteuerung 28 vorgesehen, und zwar in Form einer Kulisse 29, die in dem Kugelkopf 22 als umlaufende Radialnut 30 mit auf der einen Kugelkopfhälfte gegenüber der anderen Kugelkopfhälfte entgegengerichtetem Verlauf der Nutbahnen 31 a bzw. 31 b (vgl. Figur 12 II und III) eingearbeitet ist. Außerdem sind in einem Haltering 32 als Folgemittel 33 angeordnete, in die Kulisse 29 bzw. die Nutbahnen 31 a, 31 b der Radialnut 30 eingreifende Stifte 34 (vgl. Figur 11) oder dergleichen vorgesehen. Den Stiften 34 sind in den Taumelendlagen des Kugelstangenlagerkopfes 4 bzw. in den Bewegungspositionen zum Einleiten des Verriegelungsvorgangs in der Betriebs- oder in der Ruhestellung an gegenüberliegenden Seiten des Kugelkopfes 22 axiale Ausnehmungen 35 zugeordnet, in die die Nutbahnen 31a bzw. 31b mit einem Einführungstrichter 36 übergehen (vgl. Figur 12, I). Bei der Ausfuhrung nach Figur 14 weist die Bahnsteuerung 128 die Folgemittel 133 bzw. Führungselemente in dem gewölbten Verbindungsblech 24 auf, denen im kugeligen Kugelstangenlagerkopf 104 eine mit trichterförmiger Ausnehmung ausgebildete Kulisse 129 zugeordnet ist.

Zur Verriegelung der Drehendlagen sind für den Sperrbolzen 18 in Radialbohrungen 37 des Kugelkopfes 22 (vgl. die Figuren 11 bis 13) bzw. in Radialbohrungen 38 der Hohlwelle 108 (vgl. Figur 14) über den Umfang des Kopfes des Sperrbolzens 18 verteilt als Rastmittel Kugeln 39 (in Figur 14 nicht dargestellt) vorgesehen, die von dem Sperrbolzen 18 nach außen gedrückt werden und dabei in eine ihnen in dem Lagerring 27 bzw. dem shpärischen Lagerring 25 zugeordnete Aufnahme 40, ausgebildet beispw. als Ringnut oder Rille, bewegt werden. Die Aufnahmen 40 können an ihrer in Verriegelungsrichtung weisenden Lauffläche mit einer Anlaufschräge versehen sein, die beim Anziehen der Kugelstange 3 in die in den Drehendlagen verriegelte Position eine gezielt ausgerichtete Kraft zur axialen Verschiebung der Kugelstange 3 bzw. des Kugelstangenlagerkopfes 4 in Verriegelungsrichtung bewirken.

Der Sperrbolzen 18, der an seinem die Kugeln 39 durch die Radialbohrungen 37 bzw. 38 in die Aufnahme 40 des Lagerringes 27 bzw. 25 drückenden Umfang mit einer selbsthemmenden Schräge und/oder einem Hinterschnitt ausgebildet ist, wird in diese Sperrlage durch ein Kraftelement in Form einer Druckfeder 41 bewegt, die in der Hohlwelle 8 bzw. in der Hohlwelle 108 mit einer kammerartigen, durch das gewölbte Verbindungsblech 24 hindurchgeführten Verlängerung angeordnet ist. Die offenen Enden der Hohlwelle 8 bzw. 108 sind mit einer Endkappe 42 oder dergleichen verschlossen, während am anderen Ende 43 ein Bautenzug oder eine elektrische Betätigung des Auslösemechanismus angeschlossen werden kann.

Zur Auslösung und damit Entriegeln einerseits des Sperrbolzens 18 und andererseits der I-ormschiusskonturen (Kugeln 20 und Kalotten 21) der Formschlußverbindung 19 zwischen Hohlkugel 22 und Kugelstangenlagerkopf 4 bzw. kugeligem Kugelstangenlagerkopf 104 und im Ausführungsbeispiel gewölbtem Verbindungsblech 24 und damit Freigeben der Kugelstange 3 zum Verschwenken in eine andere Drehlage, wird der Sperrbolzen 18 durch Betätigung des in einem Kofferraum des Kraftfahrzeugs befestigten Handrad-Auslösemechanismus 16 gegen die Druckfeder 41, die sich dabei vorspannt, zurückgestellt. Die Rastmittel bzw. Kugeln 39 können damit aus der Aufnahme 40 des Lagerrings 25 bzw. 27 durch die Radialbohrungen 37 bzw. 38 des Kugelkopfes 22 bzw. der Hohlwelle 108 nach innen fallen und sich vor den Kopf des Sperrbolzens 18 legen. Damit gleichzeitig einhergehend wird der Kugelstangenlagerkopf 4 bzw. 104 aufgrund des Gewichts der Kugelstange 3 schwerkraftbedingt selbsttätig axial wegbewegt, so dass die Formschlussverbindung 19 der Kugeln 20 und Kalotten 21 aufgehoben wird. Erst wenn die Kugelstange 3 hand- oder motorbetätigt in die Drehendlage verschwenkt und der Sperrbolzen 18 durch die Druckfeder 41 beaufschlagt in seine Verriegelungsposition wieder nach vorne bewegt worden ist, werden die Rastkugeln 39 wieder durch die Radialbohrungen 37 bzw. 38 in die Aufnahme 40 des Lagerringes 25 bzw. 27 gedrückt. Die Anhängekupplung ist damit wieder verriegelt.

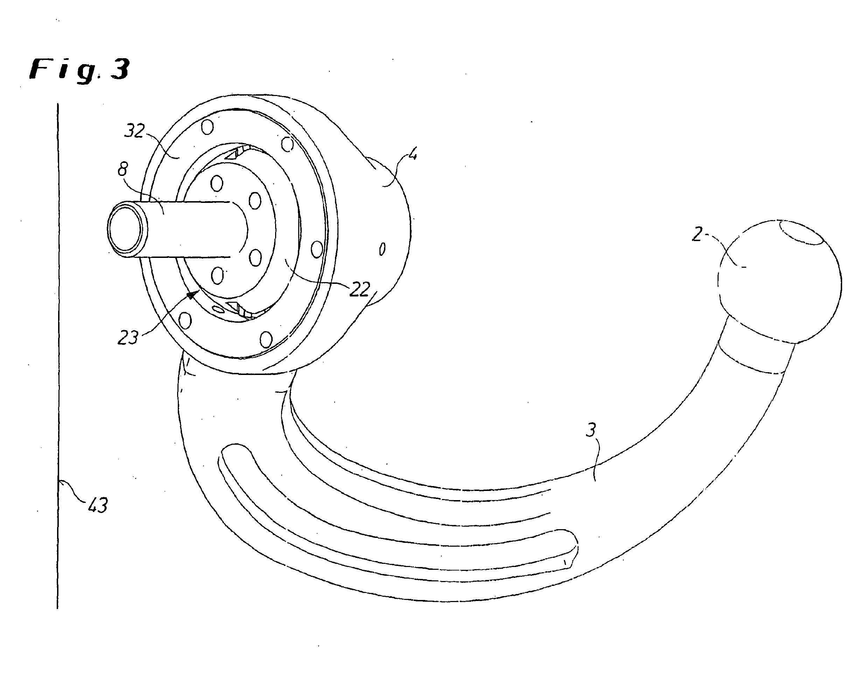

In den Figuren 2 bis 9 sind mit Bezug auf ein schematisch angedeutetes Fahrzeugheckblech 43 verschiedene Phasen des durch die Bahnsteuerung 28 gezielten Bewegungsablaufs beim Verschwenken der Kugelstange 3 bzw. des Kugelstangenlagerkopfes 4 dargestellt, wobei alle im folgenden genannten Winkelangaben nur beispielhaft sind. In Figur 2 hat sich die Kugelstange 3 in Position mit Betriebsstellung nach dem Auslösen zum Entriegeln mit axialer Verschiebung bereits von dem Kugelkopf 22 abgehoben. Sie ist damit frei zum Verschwenken in die Ruhestellung, wobei die Figur 3 die Verschwenkung um 30° wiedergibt, mit deren Erreichen die in den Nutbahnen 31 a bzw 31 b der Radialnut 30 bzw. Kulissen 29 geführten Stifte 34 des mit dem Kugelstangenlagerkopf 4 verschraubten Halterings 32 aufgrund der Bahnsteuerung 28 die Taumelbewegung der Kugelstange 3 einleitet.

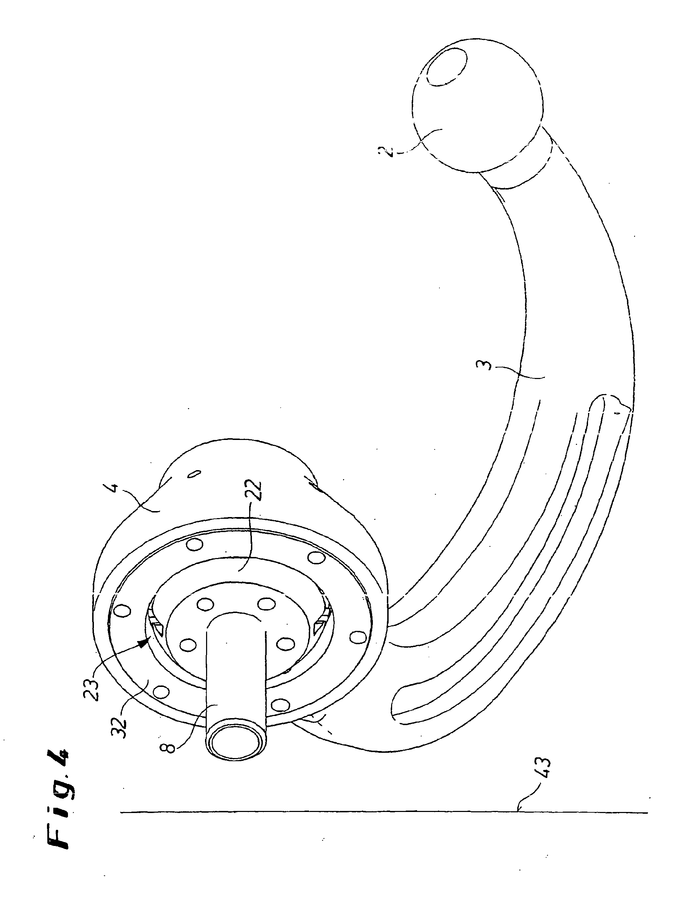

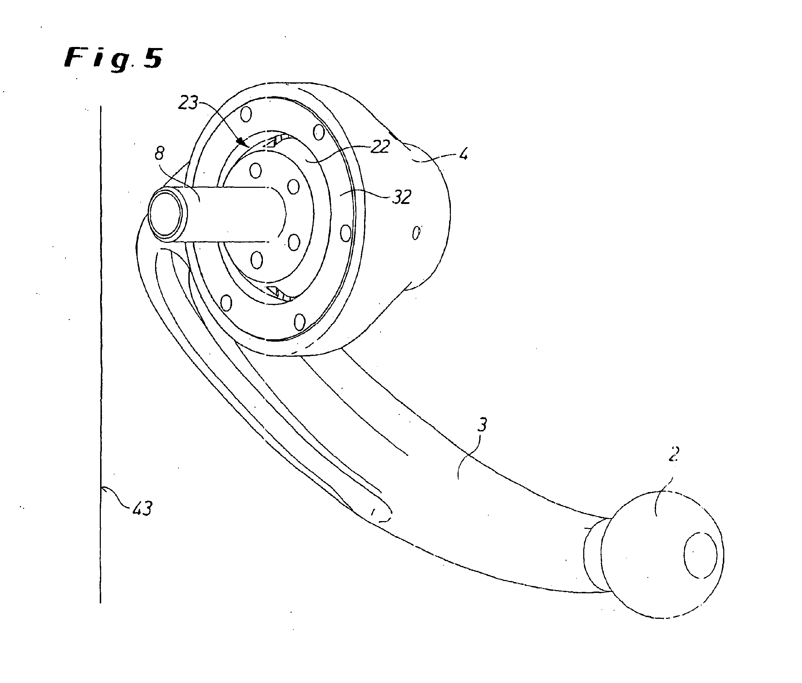

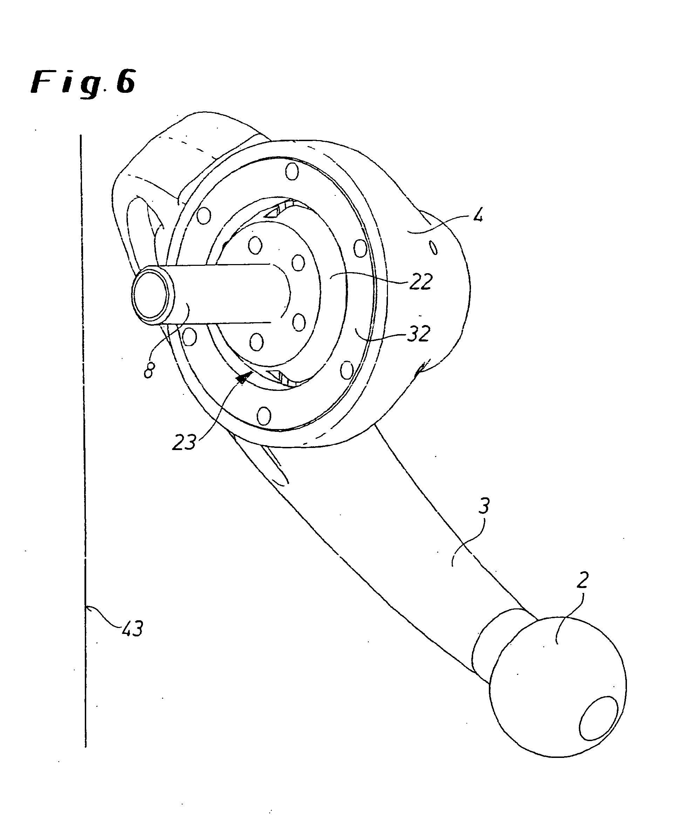

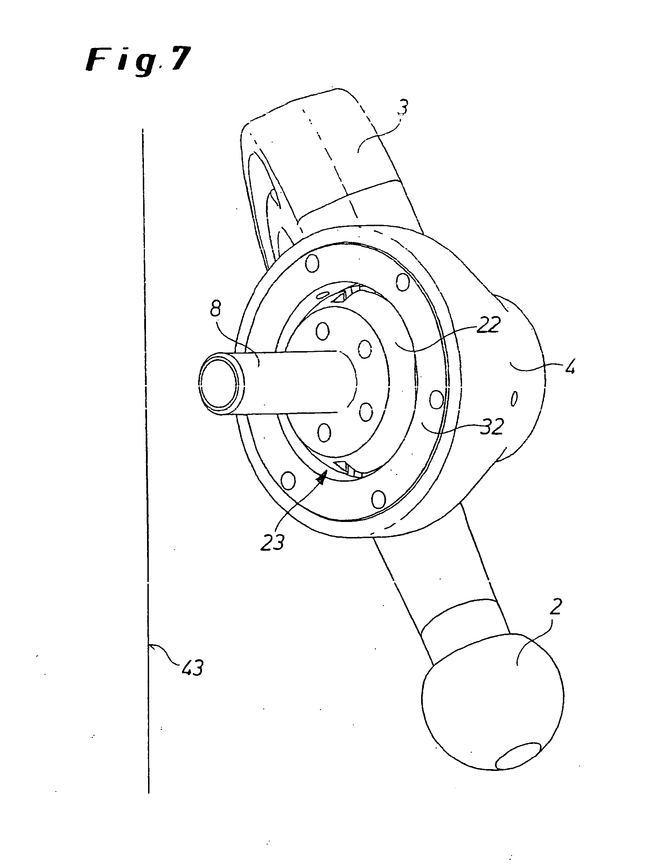

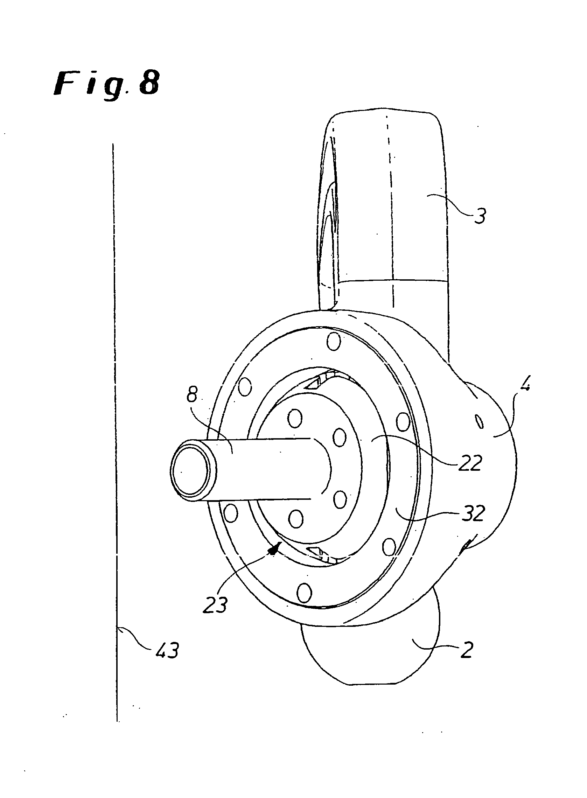

Nach Figur 4 ist die Kugelstange 3 um 60° geschwenkt und um ca. 1,5° um den Kugelkopf 22 getaumelt, bis sie gemäß Figur 5 bei einem 90°-Schwenkwinkel und einem Taumelwinkel von ca. 5° den Zenit erreicht hat und mit dem Weiterschwenken der Kugelstange 3 die Taumel-Rückbewegung stattfindet, wobei Figur 6 beim Schwenkweg von 120° einen Taumelwinkel von etwa 1,5° zeigt, wie vergleichbar mit Figur 4. Mit dem in Figur 7 gezeigten Schwenkweg von 150° - immer bezogen auf die Ausgangsposition - ist die bahngesteuerte Taumelbewegung beendet, so dass nach einer weiteren Schwenkung von 30° und damit insgesamt 180°, wie in Figur 8 gezeigt, die Position zum Einrasten bzw. Verriegeln der Kugelstange 3 in der Ruhestellung der Anhängekupplung vorliegt.

In der Ruhestellung nach Figur 9 ist der Kugelstangenlagerkopf 4 bereits wieder um den Verschiebeweg axial eingerückt, d.h. auf den Kugelkopf 22 bewegt worden, was durch den gegenüber den anderen Figuren größeren Abstand "A" erkennbar ist. Der Sperrbolzen 18 hat die Kugeln 39 nach außen gedrückt und außerdem ist die Formschlussverbindung hergestellt, d.h. die Kugeln 20 sind in Eingriff mit den Kalotten 21 des Kugelkopfes 22. Die Kupplungskugel 2 der Kugelstange 3 steht in der Ruhestellung nach Figur 9 im Vergleich zur Betriebsstellung sozusagen auf dem Kopf, liegt unsichtbar hinter dem Stoßfänger bzw. der Heckschürze und nimmt eine tiefere Lage als der abgekröpfte Endbereich der Kugelstange 3 ein, weil kein Schwenken mehr um eine Achse im Raum stattfindet und diese Position ohne eine einzige Achse im Raum erreicht wird. Dabei ist auch eine solche Position möglich, bei der die Kupplungskugel 2 oberhalb des gekröpften Bereiches liegt.

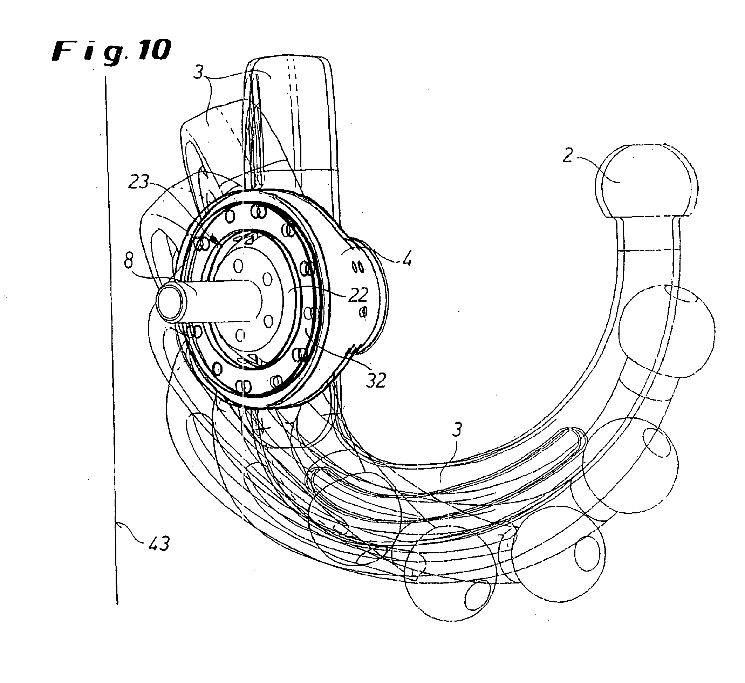

Der gesamte Schwenkverlauf der Kugelstange 3 aus der Betriebsstellung nach Figur 1 bzw. - abgesehen von der bereits axialen Verschiebung - nach Figur 2 in die Ruhelage nach Figur 9 veranschaulicht die Figur 10. Weiterhin ergibt sich daraus nicht nur die kompakte Bauweise mit zudem der Möglichkeit einer einseitigen Anbindung an den Querträger des Fahrzeugs und damit einfacher Montage, sondern insbesondere der aufgrund der Bahnsteuerung optimiert vorgegebene, taumelnde Schwenkverlauf, der es anders als bei einer einachsigen Schwenkbewegung gewährleistet, auch bei engsten Platzverhältnissen die Kugelstange ungehindert in die Ruhelage und umgekehrt zu verschwenken. Denn die Kulisse der Bahnsteuerung kann entsprechend angepasste Nutbahnen bieten. Der Abstand, den die Kugelstange 3 mit ihrem gekröpften Bereich im kritischen Abschnitt zum Fahrzeugheckblech 43 einnimmt, bleibt durch die Taumelbewegung annähernd gleich. Das bahngesteuerte Schwenksystem mit Bewegungen um einen sich im Raum verändernden, zudem gegebenenfalls axial gering verschiebenden Punkt kann dabei sehr schmalbauend ausgeführt werden und nimmt folglich nur wenig Platz in Anspruch.

## Patentansprüche

1. Anhängekupplung (1) für Krafftfahrzeuge, umfassend eine fahrzeugfest angeordnete, über eine Bahnsteuerung (28; 128) schwenkbar sowie axial verschieblich gelagerte Kugelstange (3), die an ihrem freien Ende eine Kupplungskugel (2) trägt und sowohl in ihrer Ruhelage als auch in ihrer Betriebslage über in Eingriff bringbare Formschlußkonturen einerseits eines Kugelstangenlagerkopfes(4; 104) und andererseits eines diesem gegenüberliegenden Bauteiles drehfest festlegbar ist, **dadurch gekennzeichnet, dass** der Kugelstangenlagerkopf (4; 104) auf einem beim Schwenken der Kugelstange (3) von der einen in die andere Endlage Bewegungen um einen sich im Raum verändernden Punkt bewirkendes Taumellager (23; 123) mit einer Bahnsteuerung (28; 128) des Kugelstangenlagerkopfes (4; 104) angeordnet ist und dass das Taumellager (23; 123) auf einer Hohlwelle (8; 108) angeordnet ist, die mit einer zentral integrierten axial wirkenden Verriegelung des Kugelstangenlagerkopfes (4; 104) zum in Eingriff bringen der Formschlußkonturen (19; 20, 21) sowohl in der Betriebslage als auch in der Ruhelage der Kugelstange (3) ausgebildet ist.

2. Anhängekupplung nach Anspruch 1,**dadurch gekennzeichnet, dass** das Taumellager (23) einen Kugelkopf (22) aufweist, der unter Zwischenschaltung eines Lagerringes (27) in einem halbschalenartigen Gehäuse des Kugelstangenlagerkopfes (4) angeordnet ist.

3. Anhängekupplung nach Anspruch 1, **dadurch gekennzeichnet, dass** das Taumellager (123) einen sphärisch ausgebildeten Lagerring (25) aufweist, der den Kugelstangenlagerkopf (104) trägt, vorzugsweise über einen komplementär sphärischen Zwischenring (26).

4. Anhängekupplung nach Anspruch 3, **dadurch gekennzeichnet, dass** der Kugeistangenlagerkopf (104) kugelig ausgebildet und in einem gewölbten Anbauteil (24) angeordnet ist.

5. Anhängekupplung nach Anspruch 3 oder 4, **dadurch gekennzeichnet, dass** die Hohlwelle (108) in dem Anbauteil (24) angeordnet ist.

6. Anhängekupplung nach Anspruch 2, **dadurch gekennzeichnet, dass** die Hohlwelle (8) sich bis in den Kugelkopf (22) fortsetzend einstückig mit diesem ausgebildet ist.

7. Anhängekupplung nach einem der Ansprüche 1 bis 6, **dadurch gekennzeichnet, dass** die Verriegelung einen in der Hohlwelle (8; 108) geführten, gegen ein anstehendes Kraftelement (41) über ein von außen betätigbares Druck- oder Zugmittel (16) zurückstellbaren Sperrbolzen (18) und mit diesem zusammenwirkende, in Radialbohrungen (37; 38) der Hohlwelle (108; 8) angeordnete, ein- und ausrückbare Rastmittel (39) umfasst.

8. Anhängekupplung nach einem der Ansprüche 1 bis 7, **dadurch gekennzeichnet, dass** die Bahnsteuerung (28; 138) als Kulisse (29; 129) mit darin eingreifenden Folgemitteln (33; 133) ausgebildet ist.

9. Anhängekupplung nach Anspruch 8, **dadurch gekennzeichnet, dass** die Kulisse (29) als Radialnut (30) im Kugelkopf (22) mit auf der einen Kugelkopfhälfte zu der anderen Kugelkopfhälfte entgengerichtetem Verlauf der Nutbahnen (31 a; 31 b) ausgebildet ist und die Folgemittel (33) zueinander diametral in einem im Kugelstangenlagerkopf (4) vorgesehenen Haltering (32) angeordnete Stifte (34) sind.

10. Anhängekupplung nach Anspruch 8 oder 9, **dadurch gekennzeichnet, dass** den Folgemitteln (33; 34) in den Taumel-Endlagen des Kugelstangenlagerkopfes (4) im Kugelkopf (22) axiale Ausnehmungen (35) zugeordnet sind, in die die Nutbahnen (31a; 31 b) übergehen.

11. Anhängekupplung nach Anspruch 10, **dadurch gekennzeichnet, dass** der Übergang von den Nutbahnen (31 a; 31 b) zu den Ausnehmungen (35) trichterförmig ausgebildet ist.

## Claims

1. A trailer coupling (1) for motor vehicles, comprising a ball neck (3) which is disposed fixedly on a vehicle, which is pivotable by means of a path control (28; 128) and which is mounted axially displaceably, which ball neck (3) has a coupling ball (2) at its free end and which can be fixed in a torque-proof manner both in its rest position and in its operating position by means of positive contours on the one hand of a ball neck bearing head (4; 104) and on the other hand of a component opposite thereto, which can be brought into engagement, **characterised in that** the ball neck bearing head (4; 104) is disposed on a tumble bearing (23; 123) effecting movements about a spatially varying point when the ball neck (3) pivots from the one end position to the other, with a path control (28; 128) of the ball neck bearing head (4; 104) and that the tumble bearing (23; 123) is disposed on a hollow shaft (8; 108) which is configured with a centrally integrated, axially acting locking of the ball neck bearing head (4; 104) for bringing into engagement the positive contours (19; 20, 21) both in the operating position and in the rest position of the ball neck (3).

2. The trailer coupling according to claim 1, **characterised in that** the tumble bearing (23) has a ball head (22) which is disposed in a semi-monocoque-type housing of the ball neck bearing head (4; 104) with an interposed bearing ring (27).

3. The trailer coupling according to claim 1, **characterised in that** the tumble bearing (123) has a spherically configured bearing ring (25) which bears the ball neck bearing head (4; 104), preferably by means of a complementary spherical intermediate ring (26).

4. The trailer coupling according to claim 3, **characterised in that** the ball neck bearing head (104) is configured to be spherical and is disposed in a curved attachment part (24).

5. The trailer coupling according to claim 3 or 4, **characterised in that** the hollow shaft (108) is disposed in the attachment part (24).

6. The trailer coupling according to claim 2, **characterised in that** the hollow shaft (8) is configured to extend into the ball head (22) in one piece with said ball head.

7. The trailer coupling according to any one of claims 1 to 6, **characterised in that** the lock comprises a locking bolt (18) which is guided in the hollow shaft (8; 108) and which can be set back against an in-situ force element (41) by means of an externally actuatable pressure or tension means (16) and insertable and extendable latching means (39) cooperating with said locking bolt, disposed in radial holes (37; 38) of the hollow shaft (108; 8).

8. The trailer coupling according to any one of claims 1 to 7, **characterised in that** the path control (28; 138) is configured as a link (29; 129) with following means (33; 133) engaging therein.

9. The trailer coupling according to claim 8, **characterised in that** the link (29) is configured as a radial groove (30) in the ball head (22) with the course of the groove tracks (31a; 31b) oppositely directed on one ball head half to the other ball head half and the following means (33) are pins (34) disposed diametrically to one another in a retaining ring (32) provided in the ball neck bearing head (4).

10. The trailer coupling according to claim 8 or 9, **characterised in that** axial recesses (35) into which the groove tracks (31a; 31b) go over are assigned to the following means (33; 34) in the tumble end positions of the ball neck bearing head (4) in the ball head (22).

11. The trailer coupling according to claim 10, **characterised in that** the transition from the groove tracks (31a; 31b) to the recesses (35) is configured to be funnel-shaped.

## Revendications

1. Attelage (1) pour véhicules à moteur, comprenant un crochet (3) monté fixe sur le véhicule, pouvant pivoter et se déplacer axialement au moyen d'un guidage de mouvement (28 ; 128), portant à son extrémité libre une boule d'attelage (2) et pouvant être immobilisé en rotation aussi bien dans sa position de repos que dans sa position de travail au moyen de contours à engagement mécanique pouvant être mis en prise et faisant partie d'une tête de palier de crochet d'attelage (4 ; 104) d'une part et d'un composant faisant face à celle-ci d'autre part, **caractérisé en ce que** la tête de palier de crochet d'attelage (4 ; 104) est disposée sur un palier à rotule (23 ; 123), muni d'un guidage de mouvement (28; 128) pour la tête de palier de crochet d'attelage (4 ; 104), créant, lors du pivotement du crochet d'attelage (3) d'une position extrême à l'autre, des déplacements autour d'un point se modifiant dans l'espace, et **en ce que** le palier à rotule (23 ; 123) est disposé sur un axe creux (8 ; 108) conçu avec un verrouillage central intégré, à action axiale, de la tête de palier de crochet d'attelage (4 ; 104), afin de mettre en prise les contours à engagement mécanique (19 ; 20, 21) aussi bien en position de travail qu'en position de repos du crochet d'attelage (3).

2. Attelage selon la revendication 1, **caractérisé en ce que** le palier à rotule (23) est pourvu d'une rotule (22) disposée dans un boîtier en forme de demi-coquille de la tête de palier de crochet d'attelage (4) au moyen d'une cage de rotule (27).

3. Attelage selon la revendication 1, **caractérisé en ce que** le palier à rotule (123) est pourvu d'une cage de rotule (25) de forme sphérique portant la tête de palier de crochet d'attelage (104), de préférence au moyen d'une bague intermédiaire (26) de forme sphérique complémentaire.

4. Attelage selon la revendication 3, **caractérisé en ce que** la tête de palier de crochet d'attelage (104) a une forme sphérique et est disposée dans une pièce rapportée (24) bombée.

5. Attelage selon la revendication 3 ou 4, **caractérisé en ce que** l'axe creux (108) est disposé dans la pièce rapportée (24).

6. Attelage selon la revendication 2, **caractérisé en ce que** l'axe creux (8) se prolonge jusque dans la rotule (22) et est réalisé d'un seul tenant avec celle-ci.

7. Attelage selon l'une des revendications 1 à 6,
**caractérisé en ce que** le verrouillage comprend un doigt de blocage (18) guidé dans l'axe creux (8 ; 108) et pouvant être rappelé, contre l'effort exercé par un organe de poussée (41), par le biais d'un moyen de poussée ou de traction (16) actionnable de l'extérieur, et des moyens de mise en prise (39) collaborant avec le doigt de blocage (18), disposés dans des perçages radiaux (37 ; 38) de l'axe creux (8 ; 108) et pouvant être mis en prise et libérés.

8. Attelage selon l'une des revendications 1 à 7,
**caractérisé en ce que** le guidage de mouvement (28 ; 138) est réalisée sous la forme d'une coulisse (29 ; 129) dans laquelle sont engagés des éléments guidés (33, 133).

9. Attelage selon la revendication 8, **caractérisé en ce que** la coulisse (29) est réalisé sous la forme d'une gorge radiale (30) ménagée dans la rotule (22), avec un trajet des gorges (31a ; 31b) opposé sur une demi-rotule par rapport à l'autre demi-rotule et **en ce que** les éléments guidés (33) sont des doigts (34) disposés de manière diamétralement opposée l'un par rapport à l'autre dans une bague support (32) prévue dans la tête de palier de crochet d'attelage (4).

10. Attelage selon la revendication 8 ou 9, **caractérisé en ce que** des évidements axiaux (35) ménagés dans la rotule (22) aux positions de pivotement extrêmes de la tête de palier de crochet d'attelage (4), dans lesquelles débouchent les gorges (31a ; 31b), sont associés aux éléments guidés (33 ; 34).

11. Attelage selon la revendication 10, **caractérisé en ce que** le passage des gorges (31a ; 31b) aux évidements (35) a une forme d'entonnoir.
